# EUROPEAN PATENT SPECIFICATION

(11) **EP 0 415 083 B1**
(45) Date of publication and mention of the grant of the patent: **28.09.1994**
(21) Application number: 90114366.9
(22) Date of filing: 26.07.1990
(51) Int. Cl.: G11B 23/023

(54) **Cassette container case**
Kassettenbehälter
Boîtier d'emmagasinage de cassette

(30) Priority: 01.09.1989 JP 101845/89 U; 13.09.1989 JP 106599/89 U
(43) Date of publication of application: 06.03.1991
(73) Proprietor: FUJI PHOTO FILM CO., LTD., Kanagawa (JP)
(72) Inventor: Katagiri, Shingo, Fuji Photo Film Co., Ltd., Odawara-shi, Kanagawa (JP); Ishihara, Minoru, c/o Fuji Photo Film Co.,Ltd., Odawara-shi, Kanagawa (JP)
(74) Representative: Grünecker, Kinkeldey, Stockmair & Schwanhäusser Anwaltssozietät

(56) References cited:
- EP-A- 0 440 424
- CH-A- 559 955
- GB-A- 2 100 221
- US-A- 3 638 788
- US-A- 4 385 693
- US-A- 4 648 507

## Description

### BACKGROUND OF THE INVENTION

The present invention relates generally to a cassette container case for storing a magnetic tape cassette, and more particularly to an improved cassette container case for storing a standard compact cassette.

When storing an audio type magnetic tape cassette, the cassette is generally placed in a magnetic tape cassette container case made of a plastic material. The magnetic tape cassette has a front open portion into which a magnetic head, etc., is inserted when loading the cassette into a recording/reproducing device, the magnetic tape running across the front open portion during recording and reproduction. However, without some way of enclosing the cassette, dust is liable to enter the cassette through the front open portion, and there is a risk that the user's fingers, etc., may contact the magnetic tape. In order to prevent such difficulties and to protect the whole of the cassette, a cassette container case is commonly used.

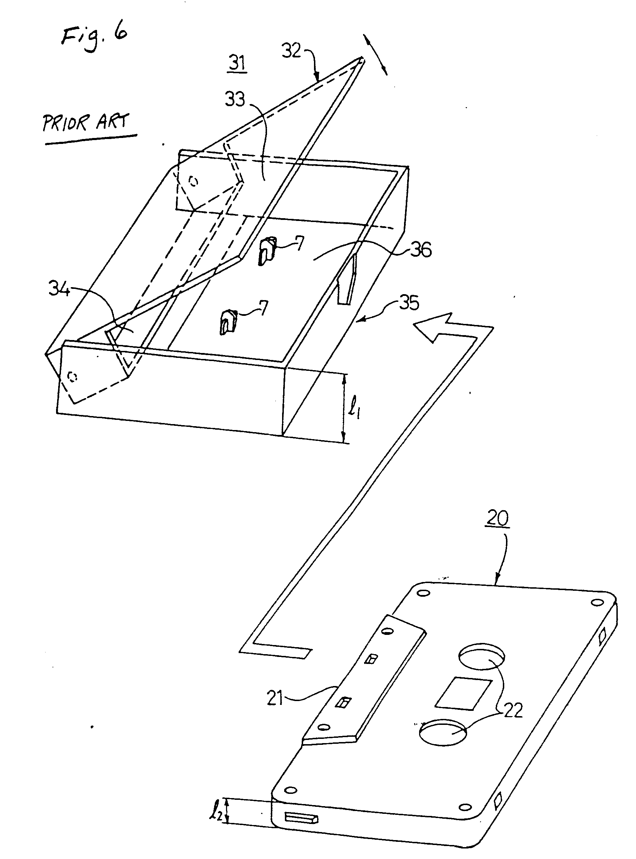

Fig. 6 shows the basic construction of a conventional cassette container case. The cassette container case 31 has a lid 32 having a pocket portion 34 for receiving a cassette 20, and a casing 35 having a pair of rotation-preventing projections 7 which are adapted to be inserted into respective shaft insertion holes 22 of the cassette 20.

In the cassette container case 31, pivot pins formed on right and left side walls of the casing 35 are fitted in corresponding through-holes formed in the right and left side walls of the pocket portion 34. With this arrangement, the lid 32 and the casing 35 can be opened and closed much like a door. The thickness of the cassette container case 31 between its walls 33 and 36 opposed respectively to the front and rear faces of the cassette 20 corresponds to the thick portion 21 of a cassette 20 in the region of its front opening. Therefore, except for the thick portion 21, the thickness ℓ₁ of the cassette container case 31 is considerably greater than the thickness ℓ₂ of the cassette 20.

Thus, when the cassette 20 is placed in the cassette container case 31 for storage purposes, a considerably greater storage space is required than if the cassette 20 were stored without a case. For this reason, if the user wishes to store as many cassettes 20 as possible in a limited space, for example, in an automobile, the user often refrains from using cassette container cases 31. However, if the cassette 20 is stored without the use of a cassette container case 31, dust tends to enter the cassette as described above, which results in a problem in that the recording and reproducing characteristics of the magnetic tape are degraded.

In order to overcome the above problems, the applicant of the present invention has earlier proposed thin-type cassette container cases. (See U.S. Patents 4,648,507 and 4,627,534).

In such a thin-type cassette container case, recesses for receiving the thick portion of the cassette at the front portion of the cassette are formed in an openable distal portion of the cassette container case.

The improved cassette container case disclosed in U.S. Patent 4,627,534 and having the precharacterised features of claim 1 will now be described with reference to Fig. 5. The cassette container case 11 shown in Fig. 5 has a lid 12 having a pocket portion 14, and a casing 15 which is pivotally connected to the lid 12 as in the conventional cassette container case. A recess 18 for receiving the thick portion 21 of a cassette 20 is formed in a wall 13 of the lid 12 opposed to the face of the cassette. Another recess 18′ for receiving the thick portion 21 of the cassette is also formed in a wall 16 of the casing 15 opposed to the face of the cassette. A pair of rotation-preventing projections 7, similar to those of the conventional cassette case, which are insertable into reel shaft insertion holes 22 are also formed on the wall 16.

The two recesses 18 and 18′ are provided in the inner surfaces of the case in opposed relation to each other. Each recess 18 or 18′ is shaped to receive the thick portion 21, that is, each recess has a shape (for example, a trapezoidal shape) flaring outward away from the axis of rotation (opening and closing movement) of the lid 12 and the casing 15.

Although not shown in the drawings, protrusions are formed on right and left side walls 19 of the casing 15, and respective depressions are formed in right and left side walls of the pocket portion 14 opposed to the walls 19. The protrusions are engageable in the depressions when the lid of the cassette container case 11 is closed, thereby preventing the lid from being accidentally opened during the storage of the cassette.

When the lid of the cassette container case 11 is in the closed position, the spacing between the wall 13 and the wall 16 is only slightly greater than the thickness ℓ₂ of the cassette 20 in areas other than the thick portion 21, and the spacing between the two recesses 18 and 18′ is only slightly greater than the thickness ℓ₅ of the thick portion 21.

Therefore, the improved cassette container case 11 shown in Fig. 5 has a much smaller thickness than the earlier cassette container case, the space required for storing it is much reduced, and the improved case is very handy for carrying.

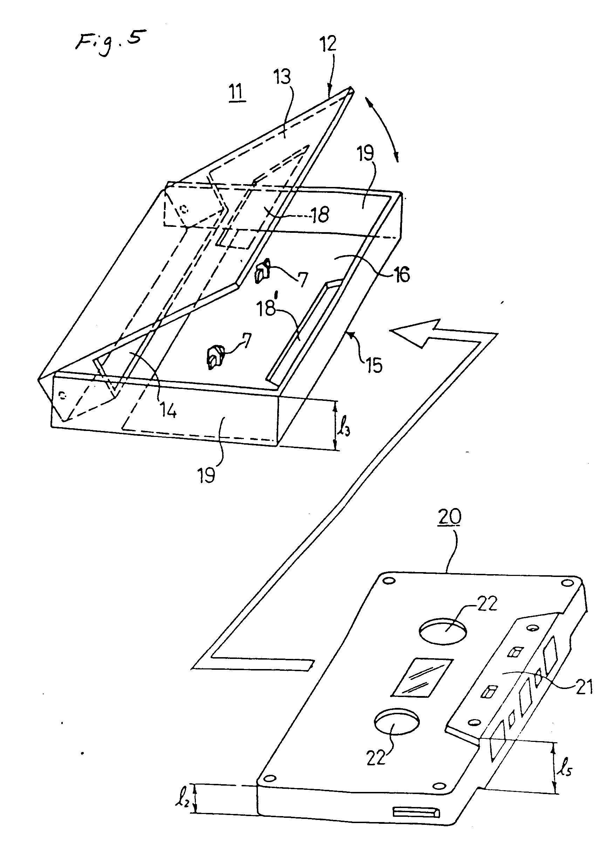

An index card 41 as shown in Fig. 4 is attached to the cassette container case 31 shown in Fig. 6, and desired data can be written on the index card 41. More specifically, the index card is positioned in such a manner that a folded portion 42 of a channel-shaped cross-section is fitted in the pocket portion 34, with a flat portion 43 laid over the flat wall 33 of the lid 32.

However, when the index card 41 is applied to the improved cassette container case 11 shown in Fig. 5, a problem is encountered. That is, since the recesses 18 are provided at the open side of the thin-type cassette container case 11, when the index card 41 is provided on the lid 12, the recess 18 formed in the lid 12 is blocked by the index card, defeating the function of this recess 18. To overcome this drawback, the present inventor has disclosed an index card 51, as shown in Fig. 4, which avoids closing the recess 18.

The index care 51 of Fig. 4 has a folded portion 52 for fitting in the pocket portion 14 similar to that of the earlier index card, but a flat portion 53 is smaller in width than the above-mentioned flat portion 43. More specifically, there is established the relationship L_{b} < Lₐ - L_{c} where Lₐ represents the width of the flat portion 43, L_{b} the width of the flat portion 53, and L_{c} the depth (width) of the recess 18. With this arrangement, the recess 18 formed in the open side of the lid 12 is not closed by the index card, so that the thick portion 21 of the cassette can be received in this recess.

However, with this configuration of the index card 51, the lid 12 is exposed at opposite sides of the recess 18, and a step is formed between such exposed portion and the portion where the index card 51 is present. This produces instabilities such as rattling. Moreover, powder tends to be produced as a result of the frictional contact between the cassette 20 and the lid 12. This is not desirable from the viewpoints of quality control and appearance.

### SUMMARY OF THE INVENTION

An object of the present invention is to overcome the above deficiencies, and more specifically an object of the invention is to provide a thin-type cassette container case which can stably hold a magnetic tape cassette despite the provision of recesses for receiving the thick portion of a cassette.

The above and other objects of the invention have been achieved by the characterising features of claim 1.

### BRIEF DESCRIPTION OF THE DRAWINGS

Fig. 1 is a developed, perspective view of an index card of the present invention;
Fig. 2 is a perspective view of the index card;
Fig. 3 is a perspective view of a cassette container case having the index card attached thereto;
Fig. 4 is a perspective view, showing a conventional index card and an index card having a reduced width;
Fig. 5 is a perspective view of a conventional cassette container case; and
Fig. 6 is a perspective view of another conventional cassette container case.

### DESCRIPTION OF THE PREFERRED EMBODIMENTS

Preferred embodiments of a cassette container case of the present invention will now be described with reference to the drawings.

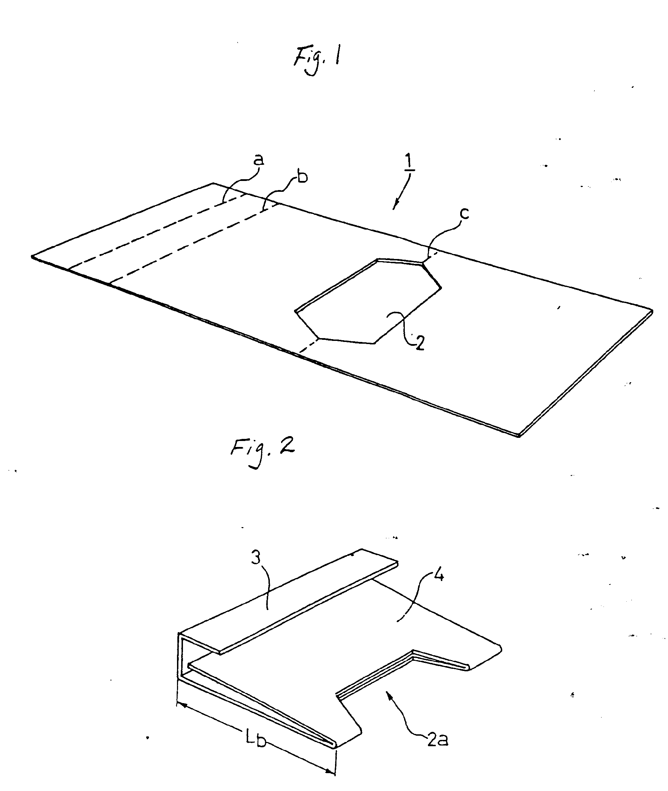

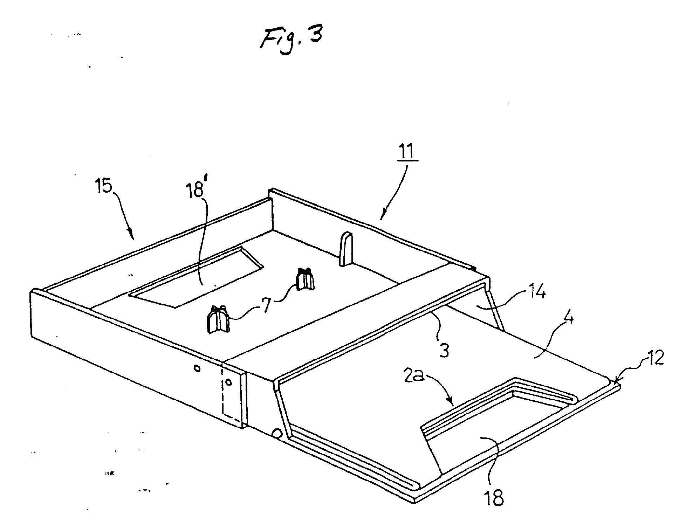

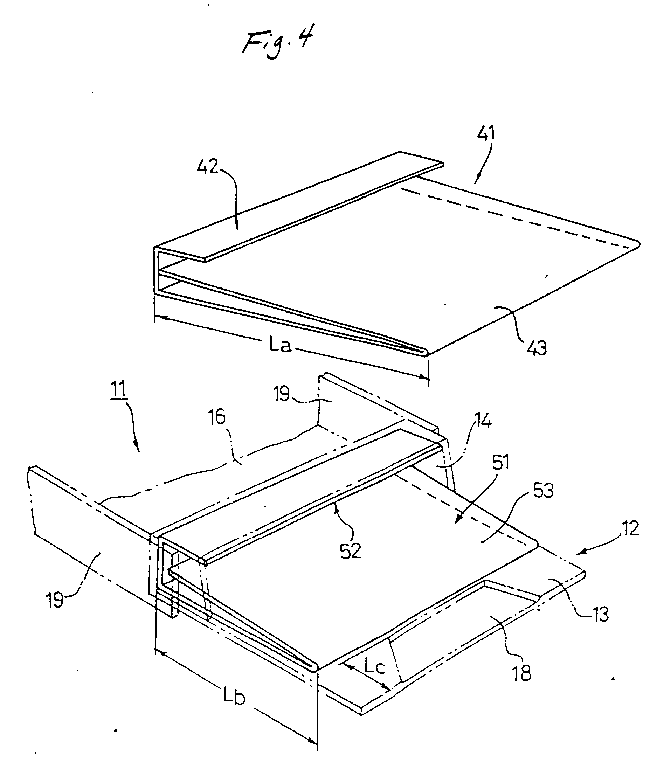

Fig. 1 is a developed, perspective view of an index card for use in the cassette container case of a preferred embodiment of the invention. Fig. 2 is a perspective view of the index card. Fig. 3 is a perspective view of the case having the index card attached thereto. The index card in this embodiment is designed to be attached to the cassette container case 11 shown in Fig. 5, and therefore this embodiment will be explained with reference to this cassette container case 11.

As shown in Fig. 1, the index card 1 comprises an elongated thick paper sheet cut from a paper blank, the thick paper sheet having an opening 2 of a hexagonal shape formed therethrough. The thick paper sheet is folded inwardly at portions thereof indicated by dashed lines a, b and c. The area of the opening 2 is twice that of the recess 18, and the shape of the opening 2 is determined in accordance with the shape of the recess 18. The position of the opening 2 is such that the opening 2 is disposed in registry with the recess 18 when the index card 1 is attached to the lid 12.

By folding the thick paper sheet along the dashed lines a and b, a pocket insertion portion 3 of a channel-shaped cross-section is formed as shown in Fig. 2. By folding the thick paper sheet along the dash line c, the hexagonal opening 2 is converted into an opening 2a whose area is half that of the hexagonal opening 2. The opening 2a corresponds to the recess 18. In the folded condition shown in Fig. 2, the width L_{b} of a doubled flat portion 4 is substantially equal to the above-mentioned width Lₐ.

The cassette container case 11 having the index card 1 attached thereto will now be described.

As shown in Fig. 3, the pocket insertion portion 3 of the index card 1 is inserted into the pocket 14 portion of the lid 12. As a result, the doubled flat portion 4 is positioned so as to be laid over the wall 13 so that the recess 18 is exposed at part of the wall 13 through the opening 2a. Therefore, when the cassette 20 is inserted into the lid 12 as indicated by an arrow in Fig. 5, one side (the upper side in Fig. 5) of the thick portion 21 passes through the opening 2a and is received in the recess 18.

In this condition, when the casing 15 is closed, the recess 18′ in the casing 15 is fitted on the lower side (Fig. 5) of the cassette thickened portion 21 already held in position, and at the same time the rotation-preventing projections 7 on the casing 15 are fitted in the respective shaft insertion holes 22 of the cassette 20, thereby completing the operation of placing the cassette 20 in the casing 15. Thus, the cassette 20 is positioned by the pocket portion 14 and the recess 18′, and is resiliently held by the doubled index card 1. Therefore, rattling, etc., of the cassette 20 is less liable to occur.

Although a preferred embodiment of the invention has been described above, the invention itself is not to be restricted thereto, and various modifications can be made.

For example, the flat portion 4 of the index card 1 is not limited to the doubled form, and may be in a single form. In this case, the opening 2 is beforehand formed into a trapezoidal shape corresponding to the recess 18.

Also, the opening 2 may be slightly smaller in size than the recess 18 so that when the thick portion 21 passes through the opening 2, the edge portion of the opening 2 is turned or folded toward the recess 18. In this case, part of the index card 1 is interposed between the edge portion of the thick portion 21 and the edge portion of the recess 18, thereby further restraining rattling.

As described above, in the cassette container case according to the present invention, the lid having the pocket portion is pivotally connected to the casing having the rotation-preventing projections in such a manner that the lid and the casing can be opened and closed like a door, and the index card having the opening or the open area located so as not to cover the recesses formed in the open sides of the lid and the casing is attached to the lid.

With the above construction of the cassette container case of the invention, the thick portion of the cassette passes through the opening or the open area of the index card and is received in the recess. Therefore, despite the fact that the index card is attached to the cassette container case, the cassette container case can be made thin as a whole.

Further, the index card also serves as a cushioning material so that rattling of the cassette is reduced, thereby decreasing the production of unpleasant noise and frictional contact between the cassette and the case.

## Claims

1. A cassette container case (11) comprising: a casing (15), a lid (12) having a pocket portion (14) for receiving a standard compact cassette (20) and pivotally connected to said casing in such a manner that said lid and said casing can be opened and closed like a door, a recess (18) for receiving a thick portion (21) of said cassette being formed in at least said lid ; and an index card (1) received in said lid; characterised in that said index card has the same size as the lid with a cut-out portion conforming to said recess.

2. The cassette container case of claim 1, wherein said casing comprises a pair of rotation-preventing projections (7) formed thereon for preventing rotation of hubs (22) of said cassette contained within said container case.

3. The cassette container case of claim 1, wherein another recess (18′) is formed in said casing opposing the recess (18) in the lid.

4. The cassette container case of claim 1, wherein said index card is folded double in its operational position, said index card in an unfolded state having a hexagonally shaped hole formed symmetrically at either side of the folding line and having substantially twice the area of said recess.

5. The cassette container case of claim 5, wherein said hole is slightly smaller than said recess.

## Patentansprüche

1. Kassettenbehältergehäuse (11) mit: einem Gehäuse (15), einer Klappe (12), die einen Taschenabschnitt (14) zur Aufnahme einer Standardkompaktkassette (20) aufweist und schwenkbar mit dem Gehäuse derart verbunden ist, daß die Klappe und das Gehäuse wie eine Tür geöffnet und geschlossen werden können, einer Ausnehmung (18) zur Aufnahme eines dicken Abschnittes (21) der Kassette, der zumindest in der Klappe ausgenommen ist; und einer Angabenkarte (1), die in der Klappe aufgenommen ist, **dadurch gekennzeichnet,** daß die Angabenkarte dieselbe Größe wie die Klappe und einen ausgesparten Abschnitt aufweist, der mit der Ausnehmung übereinstimmt.

2. Kassettenbehältergehäuse nach Anspruch 1, bei dem das Gehäuse ein Paar rotationsverhindernde Vorsprünge (7) aufweist, die an diesem ausgebildet sind, um eine Rotation der Naben (22) der Kassette, die innerhalb des Behältergehäuses aufgenommen ist, zu verhindern.

3. Kassettenbehältergehäuse nach Anspruch 1, bei dem eine weitere Ausnehmung (18′) in dem Gehäuse gegenüberliegend zu der Ausnehmung (18) in der Klappe ausgebildet ist.

4. Kassettenbehältergehäuse nach Anspruch 1, bei dem die Angabenkarte in ihrer Betriebslage zweifach gefaltet ist, und die Angabenkarte in einem ungefalteten Zustand eine hexagonal geformte Öffnung aufweist, die symmetrisch beiderseits der Faltlinie angeordnet ist und im wesentlichen doppelt so groß ist wie die Fläche der Ausnehmung.

5. Kassettenbehältergehäuse nach Anspruch 4, wobei die Öffnung geringfügig kleiner ist als die Ausnehmung.

## Revendications

1. Boîte de cassette (11) comportant : un boîtier (15), un couvercle (12) ayant une partie de logement destinée à recevoir une cassette compacte standard (20) et relié de façon pivotante audit boîtier d'une manière telle que ledit couvercle et ledit boîtier peuvent être ouverts et fermés à la manière d'une porte, un renfoncement (18) destiné à recevoir une partie épaisse (21) de ladite cassette et qui est formé au moins dans ledit couvercle; et un carton de repère (1) reçu dans ledit couvercle, caractérisé en ce que ledit carton de repère est de la même taille que le couvercle avec une partie découpée qui se conforme audit renfoncement.

2. Boîte de cassette selon la revendication 1, dans laquelle ledit boîtier comporte une paire de saillies empêchant la rotation (7) formées dessus afin d'empêcher la rotation de moyeux (22) de ladite cassette contenue dans ladite boîte de cassette.

3. Boîte de cassette selon la revendication 1, dans laquelle un autre renfoncement (18') est formé dans ledit boîtier à l'opposé du renfoncement (18) dans le couvercle.

4. Boîte de cassette selon la revendication 1, dans laquelle ledit carton de repère est plié deux fois dans sa position opérationnelle, ledit carton de repère dans un état déplié ayant un trou de forme hexagonale formé de façon symétrique de chaque côté de la ligne de pliage et ayant sensiblement deux fois la section dudit renfoncement.

5. Boîte de cassette selon la revendication 4, dans laquelle ledit trou est légèrement plus petit que ledit renfoncement.
